# EUROPEAN PATENT SPECIFICATION

(11) **EP 1 325 595 B1**
(45) Date of publication and mention of the grant of the patent: **16.11.2005**
(21) Application number: 01975791.3
(22) Date of filing: 27.09.2001
(51) Int. Cl.: H04L 12/56, H04L 29/06

(54) **PROTOCOL HEADER CONSTRUCTION AND/OR REMOVAL FOR REAL-TIME DATA PACKETS OVER WIRELESS LINKS**
KONSTRUKTION UND/ODER ENTFERNUNG VON PROTOKOLL-HEADERN FÜR ECHTZEIT DATENPAKETE ÜBER DRAHTLOSE VERBINDUNGEN
ETABLISSEMENT ET/OU ELIMINATION D'EN-TETES DE PROTOCOLES DANS DES PAQUETS DE DONNEES TRANSMIS EN TEMPS REEL LORS DE COMMUNICATIONS SANS FIL

(30) Priority: 06.10.2000 US 238410 P; 06.08.2001 US 923528
(43) Date of publication of application: 09.07.2003
(73) Proprietor: Nortel Networks Limited, St.Laurent, Quebec H4S 2A9 (CA); Bontu, Chandra Sekhar, Nepean, Ontario K2G 4L1 (CA)
(72) Inventor: BARANY, Peter, A., McKinney, TX 75070 (US)
(74) Representative: Mackenzie, Andrew Bryan
(86) International application number: PCT/US2001/042323
(87) International publication number: WO 2002/030071

(56) References cited:
- WO-A-01/63898
- WO-A-02/15627
- WO-A-96/21984
- WO-A-99/12329
- LARS-ERIK JONSSON: "Robust Header Compression for Realtime IP over Wireless" ERICSSON RESEARCH, [Online] 11 May 2000 (2000-05-11), pages 1-23, XP002214216 Retrieved from the Internet: <URL:http://www.wtc2000.org/pdf/th_02as2.p df> [retrieved on 2002-09-19]
- KRISHNA BALACHANDRAN ET AL: "EDGE Phase 2 Evolution of EGPRS for Supporting 3G Real-time Services" LUCENT TECHNOLOGIES, [Online] 1 January 2000 (2000-01-01), pages 1-13, XP002214217 Retrieved from the Internet: <URL:http://www.3gamericas.org/pdfs/evolut ion.pdf> [retrieved on 2002-09-19]
- SVANBRO K ET AL: "WIRELESS REAL-TIME IP SERVICES ENABLED BY HEADER COMPRESSION" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, vol. 2 OF 3. CONF. 51, May 2000 (2000-05), pages 1150-1154, XP002901753 ISBN: 0-7803-5719-1
- NORTEL NETWORKS: "RTP/UDP/IP Header Removal and Construction for Optimized Bearer" 3GPP TSG GERAN ADHOC ON RELEASE 2000 AND BEYOND #2, 9 - 13 October 2000, pages 1-21, XP002214218 Munich, Germany
- NOKIA: "Negotiation of Header Adaptation Functions" 3GPP TSG GERAN ADHOC #2, 9 - 13 October 2000, pages 1-4, XP002214219 Munich, Germany

## Description

### Technical Field

This invention is generally related to reconstruction and/or removal of protocol headers in messages in wireless communications.

### Background

Packet data networks are widely used to link various types of network elements, such as personal computers, servers, network telephones, Internet appliances, and so forth. Examples of data networks include private networks (such as local area networks or wide area networks) and public networks (such as the Internet). Common forms of communications between network elements across packet data networks include electronic mail, file transfer, web browsing, and other exchanges of data. More recently, with the increased capacity and reliability of packet data networks, audio communications (such as voice communications), video communications (such as video conferencing), and other forms of real-time interactive or streaming communications are becoming more common over packet data networks.

With advancements in wireless communications networks, efficient packet-switched communications over wireless networks have also become possible. Traditionally, wireless communications networks have been implemented as circuit-switched networks. In a circuit-switched network, a channel portion (such as a time slot) between two endpoints (e.g., two mobile stations) is occupied for the duration of the connection between the endpoints.

Several packet-switched wireless technologies have been proposed to provide more efficient connections between a mobile station and a packet data network, such as an Internet Protocol (IP) network. One such technology is the General Packet Radio Service (GPRS) technology, which provides for packet services in GSM (Global System for Mobile) networks, UMTS (Universal Mobile Telecommunications System) networks, or GERAN (GSM/EDGE radio access network) network. EDGE, which stands for Enhanced Data Rate for Global Evolution, is compatible with GSM and TIA/EIA-136 TDMA (time-division multiple access) wireless communications technologies. UMTS is based on the wideband code-division multiple access (W-CDMA) wireless communications technology.

Packet services that are provided by such packet-switched wireless technologies include traditional packet services such as web browsing, electronic mail, file transfer, and so forth. Additionally, real-time and interactive packet services, such as telephony services (e.g., voice-over-IP services) are also provided. In voice-over-IP communications, voice traffic is carried in packets (referred to as "packet-switched voice traffic").

One of the issues associated with carrying packet-switched voice traffic over a wireless link or air interface between the mobile station and radio network controller is that new channel coding and interleaving schemes may have to be developed. Typically, traffic channels that carry circuit-switched traffic have predetermined and standardized coding and interleaving schemes. As example coding and interleaving scheme is described in the GSM 05.03 Specification (Version 8.50 Release 1999). Developing and adopting new standards for packet-switched voice traffic (and other bearer traffic) can be a relatively long process requiring several rounds of negotiation between different parties. Also, equipment that has been manufactured to support old standards may not be able to support new, modified standards.

Packet-switched traffic (e.g., voice) is accompanied by overhead information in the form of protocol headers, e.g., Real-Time Protocol (RTP) headers, User Datagram Protocol (UDP) headers, and Internet Protocol (IP) headers. Such headers are rather large and can take up substantial amounts of bandwidth, especially since the protocol headers are communicated in each and every packet. As a result, communication of such headers over the air interface between a mobile station and radio equipment causes a reduction of the spectral efficiency of the air interface.

WO 96/21984 describes a packet radio system that encapsulates data packets of external data networks by a point-to-point protocol PPP, and passing them through one or more sub-networks to a point which supports the protocol of the encapsulated data packet. WO 96/21984 teaches the compression of the PPP packet before encapsulation.

WO 99/12329 describes a system for carrying packetized voice and other delay-intolerant traffic over a circuit-switched connection when such a connection is available. Packet data diverted to travel over a circuit-switched network reduces the load on a packet network that is less suited to voice-type calls than is the circuit-switched network.

Lars-Erik Jonnson, "Robust Header Compression for Realtime IP over Wiretess," dated May 2000, describes a header compression technique to compress headers of IP packets. K. Svanbro, "Wireless Real-Time IP Services Enabled by Header Compression," dated in 2000, also describes compression of header information in IP packets.

K. Balachandran, "EDGE PHASE 2 EVOLUTION OF EGPRS for SUPPORTING 3G REALTIME SERVICES," dated in 2000, describes statistical multiplexing of all bearer classes on a GERAN air interface for delivery over a packet-switched network.

### Summary

In general, according to one embodiment, a method of communicating data over a wireless link between a mobile station and a wireless access system comprises communicating, over the wireless link, control signaling for setting up a packet-switched communications session between the mobile station and an endpoint. Packets containing real-time data are communicated over the wireless link, with at least one protocol header associated with the packet-switched communications session being removed from each packet before communicating the packet over the wireless link. A configuration message is sent, the configuration message containing information pertaining to the at least one protocol header to enable reconstruction of the at least one protocol header by the receiving one of the mobile station and wireless access system.

Other or alternative features will become apparent from the following description, from the drawings and from the claims.

### Brief Description Of The Drawings

Fig. 1 is a block diagram of an example of a wireless communications network.
Fig. 2 illustrates an Internet Protocol (IP) packet for carrying real-time bearer traffic.
Fig. 3 is a message flow diagram of a process of establishing communications between a mobile station and another endpoint in the wireless communications network of Fig. 1, in accordance with an embodiment.
Figs. 4 and 5 are flow diagrams of processes for receiving and transmitting bearer data.
Fig. 6 is a block diagram of components in a mobile station and a radio network controller, in accordance with an example.

### Detailed Description

In the following description, numerous details are set forth to provide an understanding of the present invention. However, it will be understood by those skilled in the art that the present invention may be practiced without these details and that numerous variations or modifications from the described embodiments may be possible.

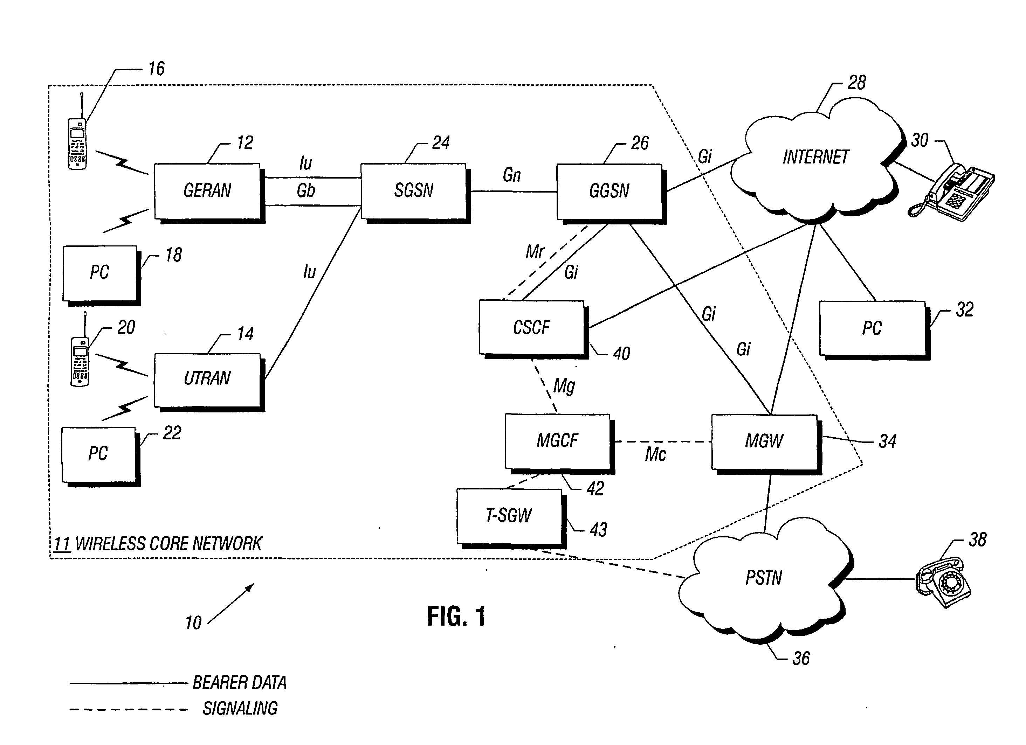

Referring to Fig. 1, a communications network 10 includes a wireless core network 11 that enables communications with mobile stations (e.g., 16, 18, 20, and 22). The wireless core network 11 includes radio access network (RAN) equipment 12 and 14 for communicating with the mobile stations 16, 18, 20 and 22 over wireless links. A wireless link is also referred to as an air interface. The radio access network equipment 12 includes a GSM/EDGE (Global System for Mobile/Enhanced Data Rate for Global Evolution) radio access network (GERAN) system. GERAN provides for enhanced data rates for best-effort services (e.g., web browsing, electronic mail, and so forth) and real-time traffic (e.g., voice-over-Internet Protocol or voice-over-IP). A version of IP, referred to as IPv4, is described in Request for Comments (RFC) 791, entitled "Internet Protocol," dated September 1981. Another version of IP is IPv6, which is described in RFC 2460, "Internet Protocol, Version 6 (IPv6) Specification," dated December 1998.

The radio access network equipment 14 includes a UMTS (Universal Mobile Telecommunication System) terrestrial radio access network (UTRAN) system. The UTRAN system 14 is based on the wideband code-division multiple access (W-CDMA) technology.

The GERAN system 12 includes a GERAN base station transceiver (or radio) and a GERAN radio network controller (RNC), and the UTRAN system 14 includes a UTRAN base station transceiver and a UTRAN radio network controller (RNC). More generally, a "wireless access system" refers to any system (such as the GERAN or UTRAN base station transceiver and RNC), implemented as one or plural modules, that is capable of communicating with mobile stations over defined channels on wireless links.

The GERAN radio network controller is coupled to a serving GPRS (General Packet Radio Service) support node (SGSN) 24 over a Gb link or an Iu link (specifically an Iu-ps link for packet-switched data). Signaling and user data can be communicated between the GERAN radio network controller and SGSN 24 over each of the Gb and Iu links. The UTRAN radio network controller is coupled to the SGSN 24 over an Iu link (specifically an Iu-ps link for packet-switched data). The SGSN 24 (along with the GGSN 26 and the RNC portions of the GERAN system 12 and UTRAN system 14) controls the establishment, processing, and termination of packet-switched communications sessions between mobile stations 16, 18, 20 and 22 and another endpoint.

The SGSN 24 is in turn coupled to a gateway GPRS support node (GGSN) 26 over a Gn interface. The GGSN 26 acts as a gateway between the wireless core network 11 and a packet network 28, such as the Internet or other type of packet network or even another wireless core network. The GGSN 26 is coupled to an edge or border gateway router (not shown) in the packet data network 28 over a Gi interface. The packet network 28 is coupled to various endpoints, such as a PC telephone 30 and a user station 32 (e.g., a computer system).

The GGSN 26 is also coupled to a media gateway (MGW) 34 over a Gi interface. The media gateway 34 acts as a gateway for communications of bearer traffic between (1) the wireless core network 11 and a circuit-switched network such as a public switched telephone network (PSTN) 36 and (2) the wireless core network 11 and the Internet 28 (in the event that transcoding is required for wireless Internet technology to wireless/landline Internet telephone calls). The PSTN 36 is coupled to various terminals 38, such as telephones, and the Internet 28 is coupled to various terminals 30, 32, such as PC telephones.

The wireless core network 11 also includes a call state control function (CSCF) module 40 that provides call control for a packet-switched communications session. In some embodiments, the CSCF module 40 is a (Session Initiation Protocol) SIP proxy or server that receives call requests on behalf of other entities, resolves logical addresses or identifiers in the call requests, and forwards the call requests to intended destinations. SIP defines a call establishment protocol that can be used to initiate call sessions as well as to invite members to a session that may have been advertised by some other mechanism, such as electronic mail, news groups, web pages, and other mechanisms. A version of SIP is described in RFC 2543, entitled "SIP: Session Initiation Protocol," dated August 1999. In other embodiments, other types of call control protocols or standards can be used, such as the H.323 standard.

Another module in the wireless core network 11 is a media gateway control function (MGCF) module 42 that provides (1) signaling conversion (e.g., SIP-to-SS7 and vice versa via the MGCF 42 and T-SGW 43 interface) and (2) control of transcoding (e.g., speech data in RTP payload formats-to-PCM transcoding and vice versa in the MGW 34).

The wireless core network 11 is capable of providing conventional packet data services, such as electronic mail, web browsing, file transfer, and so forth, for the mobile stations 16, 18, 20 and 22. Such data services may be provided for communications sessions between a mobile station and an endpoint coupled to the packet data network 28 or PSTN 36. The wireless core network 11 is also capable of providing packet-switched voice and other real-time communications between the mobile stations 16, 18, 20 and 22 and endpoints coupled to the packet data network 28 or PSTN 36. As used here, "real-time communications" refers to communications in which data is exchanged on a substantially real-time basis between two endpoints (that is, the communication is delay intolerant). Examples of real-time data include voice data exchanged in a call (or telephony) session, video data exchanged in a video conferencing session, and so forth.

In packet-switched communications, user data such as voice or other types of data are carried in packets, such as IP packets. In one embodiment, real-time data such as voice is converted to a Real-Time Protocol (RTP) format and carried as an RTP payload in a UDP packet that is encapsulated in an IP packet. RTP is described in RFC 1889, entitled "RTP: A Transport Protocol for Real-Time Applications," dated January 1996. RTP defines end-to-end transport functions that are suitable for real-time data, such as audio, video, or other data.

IP provides network layer functionality (node-to-node routing functionality) for packet-switched communications over a network. Unlike circuit-switched networks, which provide a dedicated (connection-oriented paradigm) end-to-end channel portion (e.g., a time slot) for the duration of the call session, a packet-switched network that uses UDP as the transport layer and IP as the network layer is based on a connectionless oriented paradigm (both end-to-end and node-to-node). Packets or other units of data injected into a packet-switched data network may travel independently over any path (and possibly over different paths) to a destination point. For best effort quality of service, routing of packets in packet-switched communications is based on destination addresses carried in IP packets.

The overhead portion of each packet that carries real-time data can be rather large due to the presence of several headers, including RTP and IP headers as well as a User Datagram Protocol (UDP) header. UDP is described in RFC 768, entitled "User Datagram Protocol," dated August 1980. One issue associated with carrying the protocol header information, which in one embodiment includes the RTP, UDP, and IP headers, is the increased bandwidth required to carry the overhead information. This reduces spectral efficiency over the air interface (where bandwidth is a scarce and expensive commodity) between mobile stations and respective radio network controllers 12 and 14. In addition, channel coding and interleaving schemes that have been standardized for channels carrying circuit-switched voice traffic (without the protocol headers) may no longer be acceptable for packet-switched voice traffic encapsulated in packets containing the RTP, UDP, and IP header information. Consequently, new channel coding and interleaving standards may have to be developed and adopted, which is typically a time consuming and complex process. Also, radio equipment (such as base stations) may have to be replaced if new channel coding and interleaving schemes are developed.

To address these issues, each end of the air interface between a mobile station and a radio network controller is capable of removing the RTP, UDP and IP headers from each packet before transmission of bearer traffic (e.g., voice data or other form of real-time data) over the air interface. Alternatively, instead of removing the protocol headers, a mobile station can simply choose not to generate the protocol headers. The receiving end then reconstructs the RTP, UDP, and IP header information. Thus, what is sent over the air interface is the bearer traffic itself without the overhead of the RTP, UDP, and IP headers. A benefit of sending bearer traffic (e.g., voice-over-IP data) without protocol headers is that existing channel coding and interleaving schemes can be used. Also, spectral efficiency is enhanced since communication of overhead information in each and every bearer packet can be avoided.

At least two alternative implementations of the protocol header removal/reconstruction scheme are possible. In a first implementation, the mobile station is a device (or plural devices) that requires the RTP/UDP/IP header information to be (1) constructed and then removed for voice data (or other forms of real-time data) transmitted on the uplink path from the mobile station to the radio network controller, and (2) reconstructed for voice data (or other forms of real-time data) received on the downlink path from the radio network controller to mobile station. In one example, the mobile station includes a computer (referred to as the TE device) coupled to a terminal (referred to as the MT device) capable of wireless communications with base station transceiver and a radio network controller. The combination of the TE and MT devices makes up the mobile station or user equipment (UE). In this example, the computer (or TE device) expects to receive voice packets (or other forms of real-time packets) that contain the appropriate protocol headers (e.g., RTP/UDP/IP headers) for the packet-switched communications.

In another arrangement of the first implementation, the mobile station is a single integrated device that includes software layers, including a protocol stack (e.g., RTP/UDP/IP stack), to receive packets that contain RTP/UDP/IP headers.

In the first implementation, the mobile station removes RTP/UDP/IP header information from packets that are communicated on the uplink to the radio network controller. The mobile station reconstructs RTP/UDP/IP header to add to packets containing bearer data received on the downlink.

In a second implementation, the mobile station can be a device such as a telephone that does not need to generate or reconstruct RTP/UDP/IP header information for voice data (or other forms of real-time data) transmitted on the uplink or received on the downlink, respectively. In this example, the mobile station includes the MT device without the TE device. Thus, bearer traffic, such as voice-over-IP data or other forms of real-time data, are passed directly to the other components of the mobile station for processing without reconstructing protocol headers. On the uplink, the mobile station either removes RTP/UDP/IP header information from packets or never actually generates the RTP/LIDP/IP header information so that bearer data is communicated on the uplink without protocol headers.

In both implementations, the radio network controller (12 or 14) removes protocol headers associated with a packet-switched communications session before transmitting bearer traffic on the downlink. For example, IP packets containing bearer traffic are received from the SGSN 24. The radio network controller 12 or 14 removes the RTP/UDP/IP headers from the packets and communicates the bearer traffic without the protocol headers over the downlink of the air interface to the target mobile station.

On the uplink, the radio network controller receives bearer traffic without protocol headers. It then reconstructs the protocol headers to add to packets containing the bearer traffic for communication to the SGSN 24.

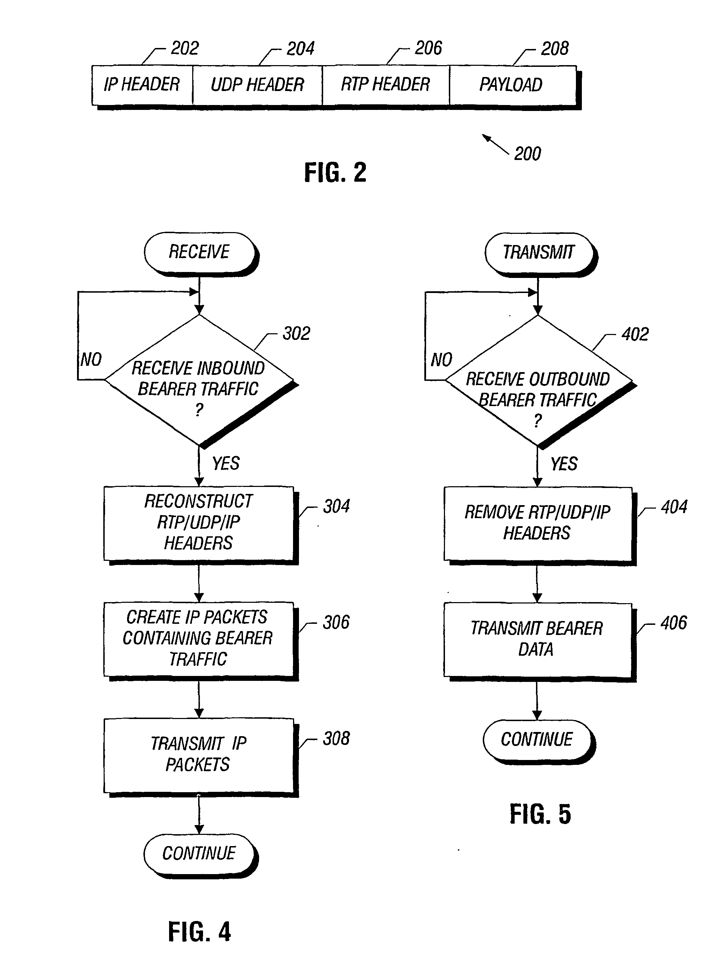

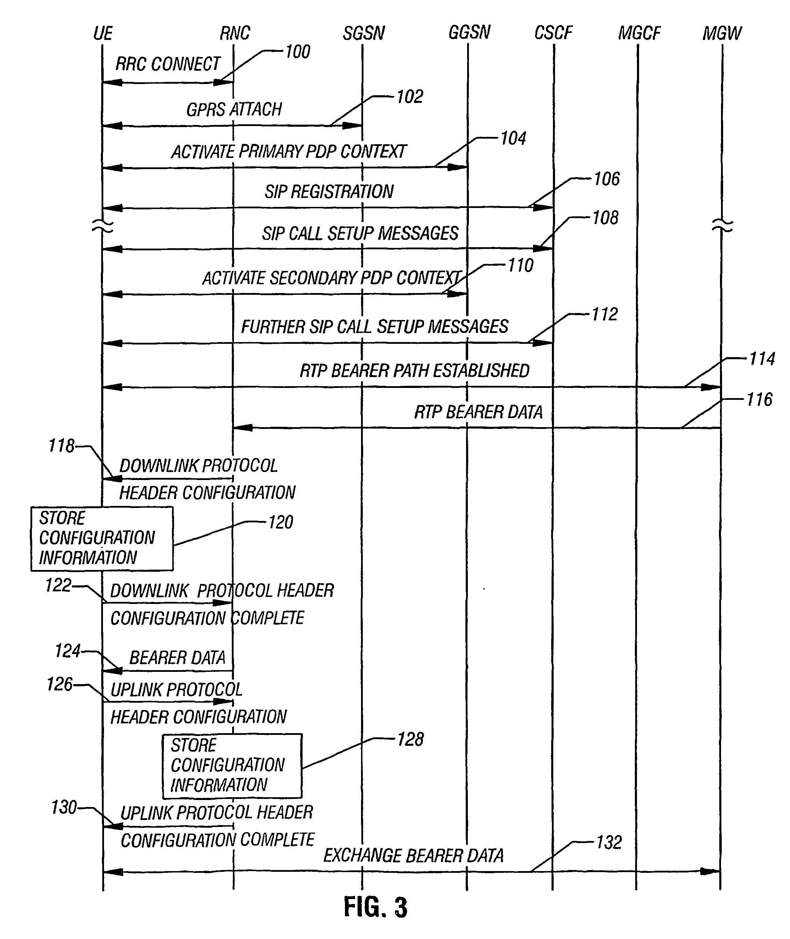

Referring to Fig. 2, an IP packet 200 for carrying bearer traffic (e.g., voice traffic or other forms of real-time traffic) is illustrated. The packet 200 includes an IP header 202, a UDP header 204, an RTP header 206, and a payload section 208. In the illustrated example, the payload section 208 carries the bearer traffic in RTP format.

In a packet-switched communications session over an IP network that involves an exchange of real-time data (e.g., voice data), IP packets according to the format of packet 200 are communicated between endpoints. At the transmitting endpoint, real-time data is converted into RTP format, and added as payload to the UDP/IP packet. The IP packet is communicated over the IP network to the receiving endpoint, where the real-time data is extracted. The IP header contains source and destination addresses that are used for routing the respective RTP/UDP/IP packet; however, to provide a quality of service that is better than best effort, other parameters such as UDP source and destination ports and protocol type number may also be additionally used for routing. The UDP header identifies UDP source and destination ports, and the RTP header identifies characteristics of the real-time data in the payload. In the context of Fig. 1, the mobile station is one endpoint that is capable of participating in a packet-switched communications session with another endpoint (e.g., one of devices 30, 32 coupled to the packet data network 28, the media gateway 34, or another mobile station).

To enable construction of the protocol header information, the IP, UDP, and RTP header information is communicated in configuration messages exchanged over the air interface between a mobile station and a radio network controller as part of the call setup procedure. The RTP, UDP, and IP information carried in the configuration messages is stored by the mobile station and/or radio network controller. The stored information enables the mobile station and/or radio network controller to construct the RTP, UDP, and IP header information in response to the mobile station and/or radio network controller receiving bearer traffic (e.g., voice data or other form of real-time traffic). Thus, for example, in the uplink direction, the mobile station removes (or does not generate) the RTP, UDP, and IF headers and sends only bearer traffic over the air interface to the radio network controller. Upon receiving the bearer traffic from the mobile station, the radio network controller accesses the stored configuration information to construct the IP, UDP, and RTP headers, with which IP packets carrying RTP payload can be constructed. Similarly, on the downlink, the radio network controller removes the RTP, UDP, and IP headers and transmits only bearer traffic over the air interface to the mobile station. According to one embodiment, the mobile station accesses stored configuration information to reconstruct the RTP, UDP, and IP header information for recreating IP packets. In another embodiment, the mobile station does not need to reconstruct the RTP, UDP, and IP header information.

In one example, the configuration messages exchanged between the mobile stations and radio network controllers include the following: UPLINK PROTOCOL HEADER CONFIGURATION message, UPLINK PROTOCOL HEADER CONFIGURATION COMPLETE message, DOWNLINK PROTOCOL HEADER CONFIGURATION message, DOWNLINK PROTOCOL HEADER CONFIGURATION COMPLETE message, DOWNLINK PROTOCOL HEADER RECONFIGURATION message, and DOWNLINK PROTOCOL HEADER RECONFIGURATION COMPLETE message.

The UPLINK PROTOCOL HEADER CONFIGURATION message is sent by a mobile station to a radio network controller and contains various predetermined RTP, UDP, and IP header information that are to be part of the RTP/UDP/IP headers in packets communicated in packet-switched communications. The information in the UPLINK PROTOCOL HEADER CONFIGURATION message is used by the radio network controller to reconstruct the RTP/UDP/IP headers to add to packets originated by the mobile station. The UPLINK PROTOCOL HEADER CONFIGURATION message contains the following information elements:

| | |
|---|---|
| INFORMATION ELEMENT/GROUP NAME | NEED |
| Message Type | MP |
| RB INFORMATION ELEMENTS | |
| RB Identity | MP |
| RTP/UDP/IP HEADER INFORMATION ELEMENTS | |
| IP Version | MP |
| Source IP Address | MP |
| Destination IP Address | MP |
| DiffServ Code Point (DSCP) | OP |
| Source UDP Port | MP |
| Destination UDP Port | MP |
| RTP Version | OP |
| RTP Payload Type (PT) | MP |
| RTP Synchronization Source Identifier (SSRC) | MP |
| RTP Sequence Number | MP |
| RTP Timestamp | MP |
| RTP Clock Frequency | OP |

The first column identifies the information elements and the second column identifies whether each information element is mandatory (MP) or optional (OP). A Message Type information element identifies the type of message, which in this case is the UPLINK PROTOCOL HEADER CONFIGURATION MESSAGE. An RB Identity information element identifies the radio bearer.

The remaining information elements of the UPLINK PROTOCOL HEADER CONFIGURATION message are information elements carrying RTP, UDP, and IP header information. An IP Version information element indicates the format of the IP header (e.g., IPv4 or IPv6). A Source IP Address information element contains the IP address of the source endpoint, in this case the mobile station. A Destination IP Address information element identifies the IP address of the destination endpoint, which can be the media gateway 34, an endpoint coupled to the packet data network 28, or another mobile station.

A Diff-Serv Code Point (DSCP) information element identifies the DSCP value. According to the differentiated services (Diff-Serv) quality of service (QoS) framework, the DSCP selects the per-hop behavior that a packet experiences at each node (e.g., a router) along a network path. The value of DSCP that is contained in each IP packet specifies a desired level of services. The Diff-Serv model employs a reservation-less mechanism for providing differentiated classes of services for network traffic. Diff-Serv is described in RFC 2474, entitled "Definition of the Differentiated Services Field (DS Field) in the IPv4 and IPv6 Headers," dated December 1998; and RFC 2475 entitled "An Architecture for Differentiated Services," dated December 1998.

A source UDP Port information element specifies the UDP port of the source endpoint (the mobile station). A Destination UDP Port information element specifies the UDP port of the destination endpoint.

Several RTP information elements are also carried in the UPLINK PROTOCOL HEADER CONFIGURATION message. An RTP Version information element contains the version (V) field that identifies the version of RTP. An RTP Payload Type (PT) information element contains the payload type (PT) field of the RTP header, which identifies the format of the RTP payload and determines its interpretation by a software application. An RTP Synchronization Source Identifier (SSRC) information element contains the SSRC field of the RTP header. The SSRC field identifies the synchronization source of a stream of packets. All packets from a synchronization source form part of the same timing and sequence number space, so a receiver groups packets by synchronization source for playback.

An RTP Sequence Number information element contains the sequence number of the RTP header. The sequence number for each RTP packet sent in a communications session increments according to calculations based upon (1) the RTP Clock Frequency information element (e.g., 8,000 Hz for the AMR-NB speech codec or 16,000 Hz for the AMR-WB speech codec) and (2) the speech codec frame duration (e.g., 20 milliseconds for both the AMR-NB and AMR-WB speech codecs). The sequence number is used to detect packet loss and to restore packet sequence.

An RTP Timestamp information element contains the timestamp field of the RTP header. The timestamp field reflects the sampling instant of the first octet or byte in the RTP data packet. The sampling instant is derived from a clock that increments monotonically and linearly in time to allow synchronization and jitter calculations. In the UPLINK PROTOCOL HEADER CONFIGURATION message, the frequency of the clock is specified in an RTP Clock Frequency information element.

The UPLINK PROTOCOL HEADER CONFIGURATION COMPLETE message is sent by the radio network controller to the mobile station to confirm the exchange of the header information (in response to receipt of the UPLINK PROTOCOL HEADER CONFIGURATION message). The message is shown below:

| | |
|---|---|
| INFORMATION ELEMENT/GROUP NAME | NEED |
| Message Type | MP |
| RB INFORMATION ELEMENTS | |
| RB Identity | MP |

The UPLINK HEADER CONFIGURATION COMPLETE message contains a Message Type information element to indicate the type of message (in this case UPLINK PROTOCOL HEADER CONFIGURATION COMPLETE), and an RB Identity information element to identify the radio bearer.

In one embodiment, the DOWNLINK PROTOCOL HEADER CONFIGURATION message is sent by the radio network controller to the mobile station to enable the mobile station to reconstruct the RTP, UDP, and IP header information. Note that the DOWNLINK PROTOCOL HEADER CONFIGURATION message is sent to mobile stations that are configured to reconstruct RTP/UDP/IP headers. For mobile stations that are not configured to reconstruct RTP/UDP/IP headers, communication of the DOWNLINK PROTOCOL HEADER CONFIGURATION message is not performed.

The DOWNLINK PROTOCOL HEADER CONFIGURATION contains the following:

| | |
|---|---|
| INFORMATION ELEMENT/GROUP NAME | NEED |
| Message Type | MP |
| RB INFORMATION ELEMENTS | |
| RB Identity | MP |
| RTP/UDP/IP HEADER INFORMATION ELEMENTS | |
| DiffServ Code Point (DSCP) | OP |
| RTP CSRC Count (CC) | OP |
| RTP Synchronization Source Identifier (SSRC) | MP |
| RTP Contributing Source Identifier (CSRC) | OP |
| RTP Sequence Number | MP |
| RTP Timestamp | MP |

The DOWNLINK PROTOCOL HEADER CONFIGURATION information element contains a Message Type information element and an RB Identity information element. In addition, the message contains various RTP-related information elements and a QoS-related information element. Note that the DOWNLINK PROTOCOL HEADER CONFIGURATION message does not include IP and UDP source and destination address and port information. Since the mobile station is UDP and IP-aware, the mobile station is able to determine the IP address and UDP port information from call control signaling used to establish a packet-switched communications session (e.g., SIP signaling).

A Diff-Serv Code Point (DSCP) information element (which contains QoS related information) contains the DSCP code for specifying a level of service for packets communicated in the communications session. An optional RTP CSRC Count (CC) information element contains the CSRC count value in an RTP header. The CSRC Count value contains the number of CSRC identifiers that are in a CSRC list (described below). The message also contains an RTP Synchronization Source Identifier (SSRC) information element as well as an RTP Contributing Source Identifier (CSRC) information element. The RTP CSRC information element contains a CSRC list (contained in an RTP header) that identifies the contributing sources for a payload contained in the packet. The number of CSRC identifiers in the CSRC list is specified in the RTP CSRC Count (CC) information element. Thus, in a multi-party call, the CRSC list identifies all parties that are involved in the call. In a multi-party call, such as a conference call, voice data from multiple persons may be mixed together. The CSRC list enables the identification of possible sources of the combined voice data. The CSRC identifiers are typically inserted by RTP mixers.

Other information elements in the DOWNLINK PROTOCOL HEADER CONFIGURATION message include an RTP Sequence Number information element and an RTP Timestamp information element.

A DOWNLINK PROTOCOL HEADER CONFIGURATION COMPLETE message is communicated in response to DOWNLINK PROTOCOL HEADER CONFIGURATION message, and contains the following elements.

| | |
|---|---|
| INFORMATION ELEMENT/GROUP NAME | NEED |
| Message Type | MP |
| RB INFORMATION ELEMENTS | |
| RB Identity | MP |

Once a packet-switched call has been established and is ongoing, the possibility exists for either of the two parties to conference in additional parties. The multi-party call setup is done using SIP signaling (or other call control signaling). Once additional parties have been conferenced in, the downlink RTP packets from the multi-parties typically go through an RTP mixer, where the voice data from multiple sources are mixed into a single RTP packet. In a two-party call, the downlink RTP packet header includes the standard 12 bytes according to RFC 1889.

However, once additional parties have been conferenced in, the downlink RTP packet header increases in size since additional RTP fields are included in the RTP header. One field that is included is the CSRC count field (CC). If the value of CC is zero, then the call is a two-party call. If the value of CC is one, then the call is a three-party call. Given CC = N, there will be N CSRC identifiers in the RTP packet header. The list of CSRC identifiers is present only when inserted by an RTP mixer. The presence of this list is indicated by the parameter CC. Thus, the radio network controller can continuously snoop or monitor the parameter CC in messages received from the SGSN 24 to determine if the RTP/UDP/IP information in the mobile station needs to be reconfigured due to the presence of additional parties in the call.

The reconfiguration is performed by use of a DOWNLINK PROTOCOL HEADER RECONFIGURATION message, whose content is provided below:

| | |
|---|---|
| INFORMATION ELEMENT/GROUP NAME | NEED |
| Message Type | MP |
| RB INFORMATION ELEMENTS | |
| RB Identity | MP |
| RTP/UDP/IP HEADER INFORMATION ELEMENTS | |
| DiffServ Code Point (DSCP) | OP |
| RTP CSRC Count (CC) | OP |
| RTP Synchronization Source Identifier (SSRC) | MP |
| RTP Contributing Source Identifier | OP |
| RTP Sequence Number | MP |
| RTP Timestamp | MP |

To acknowledge the DOWNLINK PROTOCOL HEADER RECONFIGURATION message, the mobile station sends a DOWNLINK PROTOCOL HEADER RECONFIGURATION COMPLETE message. The content of this message is provided below:

| | |
|---|---|
| INFORMATION ELEMENT/GROUP NAME | NEED |
| Message Type | MP |
| RB INFORMATION ELEMENTS | |
| RB Identity | MP |

Referring to Fig. 3, a call setup procedure according to one embodiment is illustrated. In this embodiment, packet-switched call setup is performed using SIP messaging. The entities involved in the call setup include a mobile station (labeled UE), a radio network controller, the SGSN 24, the GGSN 26, the CSCF 40, the MGCF 42, and the media gateway 34. It is assumed that the mobile station UE is the initiator of the call, with the target being a terminal coupled to the PSTN 36, such as telephone 38 in Fig. 1. For purposes of the packet-switched call, the terminating endpoint is the T-SGW 43 (Fig. 1) for control signaling and the media gateway 34 for bearer traffic. Packet control signaling and bearer traffic is converted to traditional circuit-switched control signaling and traffic for communication over the PSTN 36.

The mobile station first performs a radio resource control (RRC) connection setup (at 100) with the radio network controller. Next, the mobile station performs a GPRS attach procedure (at 102). The GPRS attach procedure is performed to inform the radio access network that the mobile station is available. Next, to activate a primary PDP (Packet Data Protocol) context, the mobile station sends (at 104) an Activate PDP Context request, which is processed by the SGSN 24 and the GGSN 26. The primary PDP context includes, among other things, the default QoS profile for the requested connection. As part of the primary PDP Context activation procedure, the SGSN 24 performs a radio access bearer assignment procedure to assign one or more radio access bearers to the mobile station.

After the primary PDP context has been activated, a SIP registration procedure is performed (at 106). The SIP registration procedure is performed with the CSCF 40, which includes the SIP proxy. SIP registration is performed to set up the profile for the mobile station in the CSCF 40, so that the CSCF 40 is aware of the mobile station's existence as well as various configuration information associated with the mobile station.

After SIP registration, the mobile station can initiate a packet-switched call by sending call setup messages (at 108). To initiate a call, the SIP INVITE request is sent, which includes the destination address of the terminal being called and indicates that the called terminal is being invited to participate in a call session. Various acknowledgment messages, as defined by SIP, are also exchanged between the mobile station and the CSCF 40. The SIP messages are routed through the CSCF 40 since the CSCF 40 acts as the SIP proxy.

Next, the mobile station initiates an activates secondary PDP context procedure (at 110). A different QoS profile can be assigned in the secondary PDP context to enable a higher level of service if desired for the bearer traffic (e.g., packet-switched speech data). After the activate secondary PDP context procedure, further SIP call setup messages are exchanged (at 112) between the mobile station and the CSCF 40. After all appropriate SIP messages have been exchanged, an RTP bearer path is established (at 114). In the RTP bearer path, IP packets containing RTP payloads are exchanged.

However, in accordance with some embodiments of the invention, the RTP/UDP/IP header information is stripped before being communicated over the air interface between the mobile station and the radio network controller. Thus, for example, if the media gateway 34 sends a packet containing RTP bearer data (at 116), the entire IP packet is not actually communicated across the air interface. As described above, the RTP/UP/IP headers are removed before being communicated.

Before that can occur, the radio network controller sends a DOWNLINK PROTOCOL HEADER CONFIGURATION message (at 118) to the mobile station, according to one implementation. Note that the DOWNLINK PROTOCOL HEADER CONFIGURATION message may not be needed if the mobile station does not need to reconstruct RTP/UDP/IP headers. The mobile station stores the configuration information (at 120) carried by the DOWNLINK PROTOCOL HEADER CONFIGURATION message. The mobile station then acknowledges the message by returning (at 122) a DOWNLINK PROTOCOL HEADER CONFIGURATION COMPLETE message to the radio network controller. Upon receiving the DOWNLINK PROTOCOL HEADER CONFIGURATION COMPLETE message, the radio network controller sends the bearer data (received from the media gateway 34) over the air interface (at 124) to the mobile station. The bearer data is sent without the RTP/UDP/IP headers, which have been removed by the radio network controller.

Similarly, if the mobile station desires to transmit bearer data targeted for the media gateway 34, it sends the bearer data without the RTP/UDP/IP header information. Before doing so, the mobile station sends (at 126) an UPLINK PROTOCOL HEADER CONFIGURATION message to the radio network controller. The radio network controller then stores (at 128) the configuration information carried by the UPLINK PROTOCOL HEADER CONFIGURATION message. In response, the radio network controller returns (at 130) an UPLINK PROTOCOL HEADER CONFIGURATION COMPLETE message to the mobile station. At this point, the mobile station is able to remove RTP/UDP/IP header information so that only bearer data is communicated across the air interface to the radio network controller. Upon receipt of the bearer data, the radio network controller is able to reconstruct the RTP/UDP/IP headers, which are added to packets and communicated to the media gateway 34 through the SGSN 24 and GGSN 26.

Referring to Fig. 4, an entity on the air interface (e.g., a mobile station that is able to reconstruct RTP/UDP/IP headers or a radio network controller) determines (at 302) if the entity has received inbound bearer traffic. If so, the entity reconstructs the RTP/UDP/IP headers (at 304). The RTP/UDP/IP headers are then added to IP packets that contain the bearer traffic (at 306). The IP packets are communicated (at 308) to the target (which may be a node or terminal coupled to a network, such as the SGSN 24, or some software application or other element within the entity).

Referring to Fig. 5, the procedure for transmitting bearer data is illustrated. If the entity (either the mobile station or radio network controller) detects receipt of outbound bearer traffic (at 402), which may be from a node or terminal coupled to a network or from an internal resource, the entity removes (or does not generate) RTP/UDP/IP headers for the bearer data (at 404). The bearer data is then transmitted (at 406) without the RTP/UDP/IP headers over the air interface.

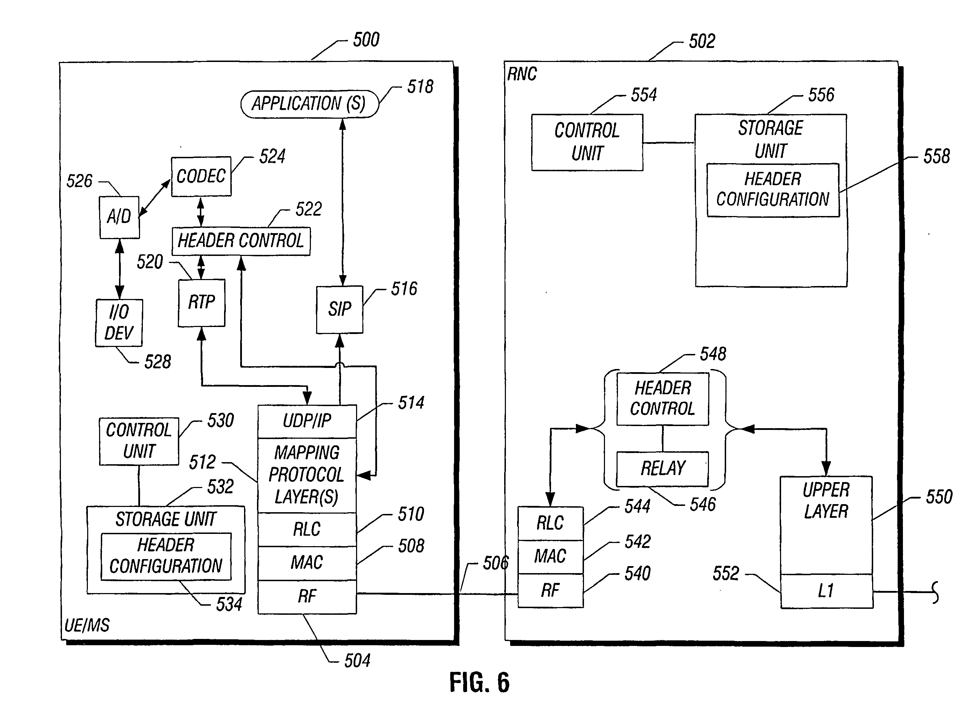

Referring to Fig. 6, various components of the mobile station (referred to as 500) and radio network controller (referred to as 502) are illustrated. The mobile station 500 includes a lower physical layer 504, referred to as a radio frequency (RF) layer. The RF layer 504 is responsible for the RF signaling protocol between the mobile station and the radio network controller over an air interface or wireless link 506. Above the RF layer 504 is a medium access control (MAC) layer 508. The MAC layer 508 controls the access signaling (request and grant) procedures for the radio channel. Above the MAC layer 508 is a radio link control (RLC) layer 510. The RLC layer 510 provides a radio-solution-dependent reliable link.

Further layers are defined above the RLC layer 510. In the illustrated example, such layers are referred to as a mapping protocol layer(s) 512, which are typically part of the Packet Data Convergence Protocol (PDCP) layer in UMTS. The PDCP layer is responsible for header compression/decompression. For example, according to GPRS the mapping protocol layer 512 includes an SNDCP (subnetwork dependent conversion protocol) layer. The SNDCP layer maps network-level characteristics onto the characteristics of the underlying network and is responsible for header compression and decompression. Further layers may also be present, although not shown.

On the other hand, according to UMTS, the mapping protocol layer 512 includes a packet data conversion protocol (PDCP) layer. The PDCP layer maps high-level characteristics onto the characteristics of the underlying radio-interface protocols and is responsible for header compression and decompression. PDCP provides protocol transparency for higher-level protocols. PDCP supports IPv4, IPv6, and PPP.

Above the mapping protocol layer 512 is a UDP/IP stack 514. The mobile station 500 also includes a SIP stack 516 for processing SIP control signaling. The SIP 516 interacts with one or more software applications 518. For example, the applications 518 may include user interface applications that allow a user to make phone calls. For bearer traffic, data is routed through an RTP layer 520. For outbound traffic, the RTP layer 520 converts the bearer data into RTP format. For inbound traffic, the RTP layer 520 extracts RTP payload.

The RTP bearer data is passed through a coder/decoder (CODEC) 524. The CODEC 524 communicates through an analog-to-digital converter 526 to convert outbound data into analog format and to convert inbound analog data into digital format. The A/D converter 526 communicates with an I/O device 528, such as a speaker and microphone.

The mobile 500 also includes a header control module 522, which is responsible for constructing RTP/UDP/IP information for inbound traffic (according to one arrangement). The header control module 522 is also responsible for causing the removal of RTP/LTDP/IP header information (or alternatively, making sure that the RTP/LTDP/IP information is not generated) for outbound traffic.

The various layers and modules in the mobile 500 can be implemented as software, hardware, or a combination of both. Software is executable on a control unit 530, which is coupled to a storage unit 532. The storage unit 532 stores various data, such as header configuration information 534, and instructions of software. The header configuration information 534 is derived from the DOWNLINK PROTOCOL HEADER CONFIGURATION message or DOWNLINK PROTOCOL HEADER RECONFIGURATION message that is received from the radio network controller 502.

The radio network controller 502 includes an RF layer 540, an MAC layer 542, and an RLC layer 544. The radio network controller 502 also includes a relay function 546 that forwards data received from one node to the next node in the route. In the radio network controller 502, the relay function 546 forwards data between the interface to the wireless link 506 and the interface to the SGSN 24, which is made up of a physical layer 552 (or L1 layer) and upper layers 550.

The radio network controller 502 also includes a header control module 548 that is responsible for removing and reconstructing RTP/UDP/IP headers. The various layers in the radio network controller 502 can be implemented in software, hardware, or a combination thereof Software is executable on a control unit 554, which is coupled to a storage unit 556. The storage unit stores various data (including header configuration information 558) and instructions of software. The header configuration information 558 is derived from UPLINK PROTOCOL HEADER CONFIGURATION messages. Note that the radio network controller 502 can store header configuration information 558 of multiple mobile stations.

The various devices and systems discussed each includes various software routines or modules. Such software routines or modules are executable on corresponding control units. Each control unit includes a microprocessor, a microcontroller, a processor card (including one or more microprocessors or microcontrollers), or other control or computing devices. As used here, a "controller" refers to a hardware component, software component, or a combination of the two. Although used in the singular sense, a "controller" can also refer to plural hardware components, plural software components, or a combination thereof.

The storage units referred to in this discussion include one or more machine-readable storage media for storing data and instructions. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact disks (CDs) or digital video disks (DVDs). Instructions that make up the various software routines or modules in the various devices or systems are stored in respective storage units. The instructions when executed by a respective control unit cause the corresponding device or system to perform programmed acts.

The instructions of the software routines or modules are loaded or transported to each device or system in one of many different ways. For example, code segments including instructions stored on floppy disks, CD or DVD media, a hard disk, or transported through a network interface card, modem, or other interface device are loaded into the device or system and executed as corresponding software routines or modules. In the loading or transport process, data signals that are embodied in carrier waves (transmitted over telephone lines, network lines, wireless links, cables, and the like) communicate the code segments, including instructions, to the device or system. Such carrier waves are in the form of electrical, optical, acoustical, electromagnetic, or other types of signals.

While the invention has been disclosed with respect to a limited number of embodiments, those skilled in the art will appreciate numerous modifications and variations therefrom. It is intended that the appended claims cover such modifications and variations as fall within the true scope of the invention.

## Claims

1. A method of communicating data over a wireless link between a mobile station (16, 18, 20, 22) and a wireless access system (12, 14), comprising:
communicating, over the wireless link, control signaling for setting up a packet-switched communications session between the mobile station (16, 18, 20, 22) and an endpoint (30, 32, 34);
communicating packets (200) containing real-time, data over the wireless link;
**characterized in that** the method further comprises:
removing at least one protocol header (202, 204, 206) associated with the packet-switched communications session from each of the packets (200) before communicating the packets (200) over the wireless link; and
sending a configuration message containing configuration information pertaining to the at least one protocol header (202, 204, 206) to enable reconstruction of the at least one protocol header (202, 204, 206) for each of the communicated packets (200) by the receiving one of the mobile station (16, 18, 20, 22) and wireless access system (12,14).

2. The method of claim 1, wherein the configuration message contains Internet Protocol header information (202) and Real-Time Protocol header information (206).

3. The method of claim 2, wherein the configuration message further contains User Datagram Protocol header information (204).

4. The method of claim 1, further comprising:
receiving a second configuration message containing configuration information pertaining to at least one protocol header (202, 204, 206);
receiving packets (200) over the wireless link, each received packet (200) being stripped of a protocol header (202, 204, 206); and
inserting a protocol header (202, 204, 206) into each of the received packets (200) based on the configuration information in the second configuration message.

5. The method of claim 1, wherein removing the at least one protocol header (202, 204, 206) is performed by the wireless access system (12, 14), the wireless access system (12, 14) comprising a radio network controller.

6. The method of claim 5, wherein removing the at least one protocol header (202, 204, 206) is performed by a GSM/EDGE radio access network (GERAN) radio network controller (12).

7. The method of claim 5, wherein removing the at least one protocol header (202, 204, 206) is performed by a UMTS radio access network (UTRAN) radio network controller (14).

8. The method of claim 1, wherein removing the at least one protocol header (202, 204, 206) is performed by the mobile station (16, 18, 20, 22).

9. The method of claim 1, wherein removing the at least one protocol header (202, 204, 206) comprises removing one or more of an Internet Protocol header (202), User Datagram Protocol header (204), and Real-Time Protocol header (206).

10. The method of claim 1, wherein communicating the packets (200) containing real-time data comprises communicating packets (200) containing voice data.

11. Computer program product comprising at least one storage medium containing instructions that when executed cause a system to perform a method comprising:
receiving real-time data in plural packets (200) over a wireless link, the real-time data associated with a packet-switched communications session, **characterized in that** at least one protocol header (202, 204, 206) has been stripped from each of the packets (200);
reconstructing at least one protocol header (202, 204, 206) for the packet-switched communications session; and
receiving a first configuration message containing configuration information relating to the at least one protocol header (202, 204, 206),
wherein reconstructing the at least one protocol header for each of the packets (200) is based on the configuration information in the first configuration message.

12. The computer program product of claim 11, wherein the first configuration message contains Internet Protocol header information (202) and Real-Time Protocol header information (206).

13. The computer program product of claim 12, wherein the first configuration message further contains User Datagram Protocol header information (204).

14. The computer program product of claim 11, wherein reconstructing the protocol header (202, 204, 206) comprises reconstructing an Internet Protocol header (202).

15. The computer program product of claim 11, wherein reconstructing the protocol header (202, 204, 206) comprises reconstructing a User Datagram Protocol header (204).

16. The computer program product of claim 11, wherein reconstructing the protocol header (202, 204, 206) comprises reconstructing a Real-Time Protocol header (206).

17. The computer program product of claim 11, wherein the method further comprises:
sending real-time data over the wireless link to an entity (12, 14, 16, 18, 20, 22); and
sending a second configuration message containing configuration information pertaining to at least one protocol header to the entity (12, 14, 16, 18, 20, 22) coupled over the wireless link to enable reconstruction of protocol headers (202, 204, 206) for real-time data sent by the system to the entity (12, 14, 16, 18, 20, 22).

18. The computer program product of claim 17, wherein the method further comprises sending a reconfiguration message to indicate a change in the packet-switched communication session, the reconfiguration message containing confirmation information pertaining to at least one protocol header (202, 204, 206).

19. The computer program product of claim 18, wherein the method comprises sending the reconfiguration message to indicate addition of another party to the packet-switched communications session.

20. A system for use in a wireless communication comprising:
an interface (504, 540) to a wireless link;
a storage module (532, 556) to store configuration information (534, 558) relating to a packet-switched communications session between a mobile station (16, 18, 20, 22) and another endpoint (30, 32, 34);
the interface (504, 540) to receive real-time data packets (200) associated with the packet-switched communications session, **characterized in that** each of the data packets (200) is stripped of at least a protocol header (202, 204, 206); and
a controller (530, 554) adapted to reconstruct a protocol header (202, 204, 206) for each of the real-time data packets (200) based on the configuration information (534, 558) and to receive a configuration message containing the configuration information (534, 558).

21. The system of claim 20, wherein the configuration information (534, 558) comprises Internet Protocol header information (202) and Real-Time Protocol header information (206).

22. The system of claim 21, wherein the configuration information (534, 558) further comprises User Datagram Protocol header information (204).

23. The system of claim 20, wherein the controller (530, 554) is adapted to receive a reconfiguration message to update the configuration information (534, 558).

24. The system of claim 20, wherein the configuration message contains at least one of Internet Protocol header information (202), User Datagram Protocol header information (204), and Real-Time Protocol header information (206).

25. The system of claim 23, wherein the controller (530, 554) is adapted to transmit real-time data packets (200) that are part of the packet-switched communications session to an entity (12, 14, 16, 18, 20, 22) over the wireless link.

26. The system of claim 25, wherein the controller (530, 554) is adapted to further communicate a second configuration message to the entity (12, 14, 16, 18, 20, 22), the second configuration message containing configuration information pertaining to at least one protocol header to enable the entity (12, 14, 16, 18,20, 22) to re-construct protocol headers (202, 204, 206) for the transmitted real-time data packets (200).

## Patentansprüche

1. Verfahren zur Übertragung von Daten über eine drahtlose Verbindungsstrecke zwischen einer Mobilstation (16, 18, 20, 22) und einem drahtlosen Zugangssystem (12, 14), mit den folgenden Schritten:
Übertragung einer Steuersignalisierung über die drahtlose Verbindungstrecke zum Aufbau einer paketvermittelten Kommunikationssitzung zwischen der Mobilstation (16, 18, 20, 22) und einem Endpunkt (30, 32, 34);
Übertragen von Paketen (200), die Echtzeit-Daten enthalten, über die drahtlose Verbindungsstrecke;
**dadurch gekennzeichnet, dass** das Verfahren weiterhin Folgendes umfasst:
Entfernen von zumindest einem Protokoll-Kopffeld (202, 204, 206), das der paketvermittelten Kommunikationssitzung zugeordnet ist, von jedem der Pakete (200), bevor die Pakete (200) über die drahtlose Verbindungsstrecke übertragen werden; und
Senden einer Konfigurationsmitteilung, die Konfigurationsinformation enthält, die sich auf das zumindest eine Protokoll-Kopffeld (202, 204, 206) bezieht, um eine Rekonstruktion des zumindest einen Protokoll-Kopffeldes (202, 204, 206) für jedes der übertragenen Pakete (200) durch die empfangende Mobilstation (16, 18, 20, 22) oder das empfangende drahtlose Zugangssystem (12, 14) zu ermöglichen.

2. Verfahren nach Anspruch 1, bei dem die Konfigurationsmitteilung Internet-Protokoll-Kopffeld-Information (202) und Echtzeit-Protokoll-Kopffeld-Information (206) enthält.

3. Verfahren nach Anspruch 2, bei dem Konfigurationsmitteilung weiterhin Benutzer -Datagramm-Protokoll-Kopffeld-Informationen (204) enthält.

4. Verfahren nach Anspruch 1, das weiterhin Folgendes umfasst:
Empfangen einer zweiten Konfigurationsmitteilung, die Konfigurationsinformation enthält, die sich auf zumindest ein Protokoll-Kopffeld (202, 204, 206) bezieht;
Empfangen von Paketen (200) über die drahtlose Verbindungsstrecke, wobei von jedem empfangenen Paket (200) ein Protokoll-Kopffeld (202, 204, 206) abgestreift wird; und
Einfügen eines Protokoll-Kopffeldes (202, 204, 206) in jedes der empfangenen Pakete (200) auf der Grundlage der Konfigurationsinformation in der zweiten Konfigurationsmitteilung.

5. Verfahren nach Anspruch 1, bei dem das Entfernen des zumindest einen Protokoll-Kopffeldes (202, 204, 206) durch das drahtlose Zugangssystem (12, 14) ausgeführt wird, wobei das drahtlose Zugangssystem (12, 14) eine Funknetzwerk-Steuerung umfasst.

6. Verfahren nach Anspruch 5, bei dem das Entfernen des zumindest einen Protokoll-Kopffeldes (202, 204, 206) durch eine GSM/EDGE-Funkzugangs-Netzwerk- (GERAN-) Funknetzwerk-Steuerung (12) ausgeführt wird.

7. Verfahren nach Anspruch 5, bei dem das Entfernen des zumindest einen Protokoll-Kopffeldes (202, 204, 206) von einer UMTS-Funkzugangs-Netzwerk-(UTRAN-) Funknetzwerk-Steuerung (14) ausgeführt wird.

8. Verfahren nach Anspruch 1, bei dem das Entfernen des zumindest einen Protokoll-Kopffeldes einen Protokoll-Kopffeldes (202, 204, 206) durch die Mobilstation (16, 18, 20, 22) durchgeführt wird.

9. Verfahren nach Anspruch 1, bei dem das Entfernen des zumindest einen Protokoll-Kopffeldes (202, 204, 206) das Entfernen von einem oder mehreren Internet-Protokoll-Kopffeldern (202), Benutzer-Datagramm-Protokoll-Kopffeldern (204) und Echtzeit-Protokoll-Kopffeldern (206) umfasst.

10. Verfahren nach Anspruch 1, bei dem die Übertragung der Echtzeit-Daten enthaltenden Pakete (200) die Übertragung von Paketen (200) umfasst, die Sprachdaten enthalten.

11. Computerprogramm-Produkt, das zumindest ein Speichermedium umfasst, das Befehle enthält, die bei ihrer Ausführung bewirken, dass ein System ein Verfahren ausführt, das Folgendes umfasst:
Empfangen von Echtzeit-Daten in mehreren Paketen (200) über eine drahtlose Verbindungsstrecke, wobei die Echtzeit-Daten einer paketvermittelten Kommunikationssitzung zugeordnet sind, **dadurch gekennzeichnet, dass** zumindest ein Protokoll-Kopffeld (202, 204, 206) von jedem der Pakete (200) abgestreift wurde;
Rekonstruieren von zumindest einem Protokoll-Kopffeld (202, 204, 206) für die paketvermittelte Kommunikationssitzung; und
Empfangen einer ersten Konfigurationsmitteilung, die Konfigurationsinformationen enthält, die sich auf das zumindest eine Protokoll-Kopffeld (202, 204, 206) beziehen,
wobei die Rekonstruktion des zumindest einen Protokoll-Kopffeldes für jedes der Pakete (200) auf der Konfigurationsinformation in der ersten Konfigurationsmitteilung beruht.

12. Computerprogramm-Produkt nach Anspruch 11, bei dem die erste Konfigurationsmitteilung Internet-Protokoll-Kopffeld-Information (202) und Echtzeit-Protokoll-Kopffeld-Information (206) enthält.

13. Computerprogramm-Produkt nach Anspruch 12, bei dem die erste Konfigurationsmitteilung weiterhin eine Benutzer-Datagramm-Protokoll-Kopffeld-Information (204) enthält.

14. Computerprogramm-Produkt nach Anspruch 11, bei dem die Rekonstruktion des Protokoll-Kopffeldes (202, 204, 206) die Rekonstruktion eines Internet-Protokoll-Kopffeldes (202) umfasst.

15. Computerprogramm-Produkt nach Anspruch 11, bei dem die Rekonstruktion des Protokoll-Kopffeldes (202, 204, 206) die Rekonstruktion eines Benutzer-Datagramm-Protokoll-Kopffeldes (204) umfasst.

16. Computerprogramm-Produkt nach Anspruch 11, bei dem die Rekonstruktion des Protokoll-Kopffeldes (202, 204, 206) die Rekonstruktion eines Echtzeit-Protokoll-Kopffeldes (206) umfasst.

17. Computerprogramm-Produkt nach Anspruch 11, bei dem das Verfahren weiterhin Folgendes umfasst:
Senden von Echtzeit-Daten über die drahtlose Verbindungsstrecke zu einer Einheit (12, 14, 16, 18, 20, 22); und
Senden einer zweiten Konfigurationsmitteilung, die Konfigurationsinformation enthält, die sich auf zumindest ein Protokoll-Kopffeld bezieht, an die über die drahtlose Verbindungsstrecke gekoppelte Einheit (12, 14, 16, 18, 20, 22), um die Rekonstruktion von Protokoll-Kopffeldern (202, 204, 206) für Echtzeit-Daten zu ermöglichen, die von dem System an die Einheit (12, 14, 16, 18, 20, 22) gesandt werden.

18. Computerprogramm-Produkt nach Anspruch 17, bei dem das Verfahren weiterhin das Senden einer Umkonfigurationsmitteilung umfasst, um eine Änderung der paketvermittelten Kommunikationssitzung anzuzeigen, wobei die Umkonfgurationsmitteilung Konfigurationsinformation enthält, die sich auf das zumindest eine Protokoll-Kopffeld (202, 204, 206) bezieht.

19. Computerprogramm-Produkt nach Anspruch 18, bei dem das Verfahren das Senden der Umkonfigurationsmitteilung zur Anzeige einer Hinzufügung eines weiteren Teilnehmers an der Paket-vermittelten Kommunikationssitzung umfasst.

20. System zur Verwendung bei einer drahtlosen Kommunikation, mit:
einer Schnittstelle (504, 540) zu einer drahtlosen Verbindungsstrecke;
ein Speichermodul (532, 556) zum Speichern von Konfigurationsinformation (534, 558), die sich auf eine paketvermittelte Kommunikationssitzung zwischen einer mobilen Station (16, 18, 20, 22) und einem anderen Endpunkt (30, 32, 34) bezieht;
wobei die Schnittstelle (504, 540) zum Empfang von Echtzeit-Datenpaketen (200) dient, die der paketvermittelten Kommunikationssitzung zugeordnet sind, **dadurch gekennzeichnet, dass** von jedem der Datenpakete (200) zumindest ein Protokoll-Kopffeld (202, 204, 206) abgestreift wird; und
eine Steuerung (530, 554) zur Rekonstruktion eines Protokoll-Kopffeldes (202, 204, 206) für jedes der Echtzeit-Datenpakete (200) auf der Grundlage der Konfigurationsinformation (534, 558) und zum Empfang einer Konfigurationsmitteilung ausgebildet ist, die die Konfigurationsinformation (534, 558) enthält.

21. System nach Anspruch 20, bei dem die Konfigurationsinformation (534, 558) lnternet-Protokoll-Kopffeld-Information (202) und Echftzeit-Protokoll-Kopffeld-Information (206) umfasst.

22. System nach Anspruch 21, bei dem die Konfigurationsinformation (5334, 558) weiterhin Benutzer-Datagramm-Protokoll-Kopffeld-Information (204) umfasst.

23. System nach Anspruch 20, bei dem die Steuerung (530, 554) zum Empfang einer Umkonfigurationsmitteilung zur Aktualisierung der Konfigurationsinformation (534, 558) ausgebildet ist.

24. System nach Anspruch 20, bei dem die Konfigurationsmitteilung zumindest eine einer Internet-Protokoll-Kopffeld-Information (202), Benutzer-Datagramm-Protokoll- Kopffeld-Information (204) und Echtzeit-Protokoll-Kopffeld-Information (206) enthält.

25. System nach Anspruch 23, bei dem die Steuerung (530, 554) zum Senden von Echtzeit-Datenpaketen (200), die Teil der paketvermittelten Kommunikationssitzung sind, an eine Einheit (12, 14, 16, 18, 20, 22) über die drahtlose Verbindungsstrecke ausgebildet ist.

26. System nach Anspruch 25, bei dem die Steuerung (530, 554) weiterhin zur Übertragung einer zweiten Konfigurationsmitteilung an die Einheit (12, 14, 16, 18, 20, 22) ausgebildet ist, wobei die zweite Konfigurationsmitteilung Konfigurationsinformation enthält, die sich auf das zumindest eine Protokoll-Kopffeld beziehen, um es der Einheit (12, 14, 16, 18, 20, 22) zu ermöglichen, Protokoll-Kopffelder (202, 204, 206) für die übertragenen Echtzeit-Datenpakete (200) zu rekonstruieren.

## Revendications

1. Procédé de communication de données sur une liaison sans fil entre une station mobile (16, 18, 20, 22) et un système d'accès sans fil (12, 14), comprenant :
- la communication, sur la liaison sans fil, de la signalisation de commande afin d'établir une session de communications à commutation de paquets entre la station mobile (16, 18, 20, 22) et un point terminal (30, 32, 34) ;
- la communication de paquets (200) contenant des données en temps réel sur la liaison sans fil ;
**caractérisé en ce que** le procédé comprend en outre :
- la suppression d'au moins un en-tête de protocole (202, 204, 206) associé avec la session de communications à commutation de paquets (200) de chacun des paquets (200) avant de communiquer les paquets (200) sur la liaison sans fil ; et
- l'envoi d'un message de configuration contenant des informations de configuration se rapportant au moins à un en-tête de protocole (202, 204, 206) afin de permettre la reconstruction d'au moins un en-tête de protocole (202, 204, 206) pour chacun des paquets communiqués (200) par celui de réception de la station mobile (16, 18, 20, 22) et du système d'accès sans fil (12, 14).

2. Procédé selon la revendication 1, dans lequel le message de configuration contient des informations relatives à l'en-tête de protocole Internet (202) et des informations relatives à l'en-tête de protocole de transmission en temps réel (206).

3. Procédé selon la revendication 2, dans lequel le message de configuration contient en outre des informations relatives à l'en-tête de protocole UDP (« User Datagram Protocol ») (204).

4. Procédé selon la revendication 1, comprenant en outre :
- la réception d'un second message de configuration contenant des informations de configuration se rapportant au moins à un en-tête de protocole (202, 204, 206) ;
- la réception des paquets (200) sur la liaison sans fil, chaque paquet reçu (200) étant dépouillé d'un en-tête de protocole (202, 204, 206) ; et
- l'insertion d'un en-tête de protocole (202, 204, 206) dans chacun des paquets reçus (200) en se basant sur les informations de configuration dans le second message de configuration.

5. Procédé selon la revendication 1, dans lequel la suppression d'au moins un en-tête de protocole (202, 204, 206) est exécutée par le système d'accès sans fil (12, 14), lequel système d'accès sans fil (12, 14) comprenant un contrôleur de réseau de radiocommunication.

6. Procédé selon la revendication 5, dans lequel la suppression d'au moins un en-tête de protocole (202, 204, 206) est exécutée par un contrôleur du réseau (12) d'accès radio GSM/EDGE (GERAN) du réseau de radiocommunication.

7. Procédé selon la revendication 5, dans lequel la suppression d'au moins un en-tête de protocole (202, 204, 206) est exécutée par un contrôleur (14) du réseau d'accès radio UMTS (UTRAN) du réseau de radiocommunication.

8. Procédé selon la revendication 1, dans lequel la suppression d'au moins un en-tête de protocole (202, 204, 206) est exécutée par la station mobile (16, 18, 20, 22).

9. Procédé selon la revendication 1, dans lequel la suppression d'au moins un en-tête de protocole (202, 204, 206) comprend la suppression d'un ou de plusieurs en-têtes de protocole Internet (202), en-têtes de protocole UDP (« User Datagram Protocol ») (204) et en-têtes de protocole de transmission en temps réel (206).

10. Procédé selon la revendication 1, dans lequel la communication des paquets (200) contenant des données en temps réel comprend des paquets de communication (200) contenant les données vocales.

11. Produit de programme informatique comprenant au moins un support de stockage contenant des instructions qui, lorsqu'elles sont exécutées, entraînent l'exécution par un système d'un procédé comprenant :
- la réception de données en temps réel dans plusieurs paquets (200) sur une liaison sans fil, lesquelles données en temps réel étant associées avec une session de communications à commutation de paquets, **caractérisée en ce que** au moins un en-tête de protocole (202, 204, 206) a été dépouillé de chacun des paquets (200) ;
- la reconstruction d'au moins un en-tête de protocole (202, 204, 206) pour la session de communications à commutation de paquets ; et
- la réception d'un premier message de configuration contenant des informations de configuration relatives au moins à un en-tête de protocole (202, 204, 206),
- dans lequel la reconstruction d'un au moins en-tête de protocole (202, 204, 206) pour chacun des paquets (200) est basée sur les informations de configuration dans le premier message de configuration.

12. Produit de programme informatique selon la revendication 11, dans lequel le premier message de configuration contient des informations relatives à l'en-tête de protocole Internet (202) et des informations relatives à l'en-tête de protocole de transmission en temps réel (206).

13. Produit de programme informatique selon la revendication 12, dans lequel le premier message de configuration contient en outre des informations relatives à l'en-tête de protocole UDP (« User Datagram Protocol ») (204).

14. Produit de programme informatique selon la revendication 11, dans lequel la reconstruction de l'en-tête de protocole (202, 204, 206) comprend la reconstruction de l'en-tête de protocole Internet (202).

15. Produit de programme informatique selon la revendication 11, dans lequel la reconstruction de l'en-tête de protocole (202, 204, 206) comprend la reconstruction d'un en-tête de protocole UDP (« User Datagram Protocol ») (204).

16. Produit de programme informatique selon la revendication 11, dans lequel la reconstruction de l'en-tête de protocole (202, 204, 206) comprend la reconstruction d'un en-tête de protocole de transmission en temps réel (206).

17. Produit de programme informatique selon la revendication 11, dans lequel le procédé comprend en outre :
- l'envoi de données en temps réel sur la liaison sans fil vers une entité (12, 14, 16, 18, 20, 22) ;
- l'envoi d'un second message de configuration contenant des informations de configuration se rapportant à au moins un en-tête de protocole vers l'entité (12, 14, 16, 18, 20, 22) couplé sur la liaison sans fil pour permettre la reconstruction des en-têtes de protocoles (202, 204, 206) pour des données en temps réel envoyées par le système vers l'entité (12, 14, 16, 18, 20, 22).

18. Produit de programme informatique selon la revendication 17, dans lequel le procédé comprend en outre l'envoi d'un message de reconfiguration pour indiquer un changement dans la session de communications à commutation de paquets, lequel message de reconfiguration contenant des informations de configuration se rapportant à au moins un en-tête de protocole (202, 204, 206).

19. Produit de programme informatique selon la revendication 18, dans lequel le procédé comprend l'envoi du message de reconfiguration pour indiquer l'ajout d'une autre partie à la session de communications à commutation de paquets.

20. Système destiné à l'utilisation dans une communication sans fil comprenant :
- une interface (504, 540) vers une liaison sans fil ;
- un module de stockage (532, 556) pour stocker les informations de configuration (534, 558) se rapportant à une session de communications à commutation de paquets entre une station mobile (16, 18, 20, 22) et un autre point limite (30, 32, 34) ; l'interface (504, 540) pour recevoir des paquets de données en temps réel (200) associée à la session de communications de commutation à paquets, **caractérisée en ce que** chacun des paquets de données (200) est dépouillé d'au moins un en-tête de protocole (202, 204, 206) ; et
- un contrôleur (530, 554) adapté pour reconstruire un en-tête de protocole (202, 204, 206) pour chacun des paquets de données en temps réel (200) en se basant sur les informations de configuration (534, 558) et pour recevoir un message de configuration contenant les informations de configuration (534, 558).

21. Système selon la revendication 20, dans lequel les informations de configuration (534, 558) comprennent des informations relatives à l'en-tête de protocole Internet (202) et des informations relatives à l'en-tête de protocole de transmission en temps réel (206).

22. Système selon la revendication 21, dans lequel les informations de configuration (534, 558) comprennent en outre des informations relatives à l'en-tête de protocole UDP (« User Datagram Protocol ») (204).

23. Système selon la revendication 20, dans lequel le contrôleur (530, 554) est adapté pour recevoir un message de reconfiguration pour mettre à jour les informations de configuration (534, 558).

24. Système selon la revendication 20, dans lequel le message de configuration contient au moins l'une des informations relatives à l'en-tête de protocole Internet (202), des informations relatives à l'en-tête de protocole (« User Datagram Protocol ») UDP (204) et des informations relatives à l'en-tête de protocole de transmission en temps réel (206).

25. Système selon la revendication 23, dans lequel le contrôleur (530, 554) est adapté pour transmettre des paquets de données en temps réel (200) qui font partie d'une session de communications à commutation de paquets vers une entité (12, 14, 16, 18, 20, 22) sur la liaison sans fil.

26. Système selon la revendication 25, dans lequel le contrôleur (530, 554) est adapté pour communiquer en outre un second message de configuration à l'entité (12, 14, 16, 18, 20, 22), lequel second message de configuration contenant des informations de configuration se rapportant au moins à un en-tête de protocole pour permettre à l'entité (12, 14, 16, 18, 20, 22) de reconstruire les en-têtes de protocole (202, 204, 206) pour les paquets de données en temps réel (200) transmis.
